# EUROPÄISCHE PATENTANMELDUNG

(11) **EP 3 385 580 A1**
(43) Veröffentlichungstag der Anmeldung: **10.10.2018**
(21) Anmeldenummer: 18166242.0
(22) Anmeldetag: 09.04.2018
(51) Int. Cl.: F16K 1/52, F16K 31/56, F16K 11/00, F16K 27/00, F16K 31/50, F16K 11/22

(54) **SANITÄRVENTIL MIT WENIGSTENS EINEM WASSERSCHALTER**

(30) Priorität: 07.04.2017 DE 102017107527
(71) Anmelder: Kludi GmbH & Co. KG, 58706 Menden Sauerland (DE)
(72) Erfinder: GEBHART, Paul, 58730 Fröndenberg (DE); WIESENDAHL, Guido, 58099 Hagen (DE)
(74) Vertreter: Tarvenkorn, Oliver

(57) **Zusammenfassung**

Ein Sanitärventil (100) mit wenigstens einem Wasserschalter (20) umfasst wenigstens:
- ein Grundgehäuse (10) mit wenigstens einem Strömungskanal (11), der sich zwischen einer Zulauföffnung (12) und einer Auslauföffnung (13) erstreckt;
wobei der Wasserschalter (20) ein Dichtelement (24) zum Eingriff in einen Ventilsitz (14) in dem Strömungskanal (11) und wenigstens ein gegenüber einem Ventilgehäuse axial verschiebbares Bedienelement (2') aufweist, und
- ein Regulierventil (30) zur Einstellung der Wassermenge und/oder -temperatur mit einem um eine Achse (31) drehbaren Bedienelement (32).
Dabei ist das drehbare Bedienelement (32) des Regulierventils (30) entlang der Achse (31) verschiebbar und wirkt über ein nach außen ragendes Mitnehmerelement (33) auf das Bedienelement (21) des Wasserschalters (20).

## Beschreibung

Die Erfindung betrifft ein Sanitärventil mit wenigstens einem Wasserschalter mit den Merkmalen des Oberbegriffs des Anspruchs 1.

Ein Wasserschalter ist aus der DE 20 2004 006 163 U1 bekannt. Damit kann der Durchfluss in Wasserleitungen durch Tastendruck ein- und ausgeschaltet werden, wie man es von der Hauselektroinstallation gewohnt ist. Es wird keine herkömmliche Sanitärarmatur betätigt, bei der man durch Drehen eines Ventilknaufes oder Heben und Senken eines Hebels die Leitungen öffnet und wieder schließt. Allein durch Verschieben eines Ringmagneten entlang eines Gehäuserohrs kann die Wasserschalteinheit mit wenig Kraft umgeschaltet werden. Der Ringmagnet liegt dabei außen am Gehäuse, so dass keine Dichtigkeitsprobleme am Betätigungselement auftreten können. Ein solcher Wasserschalter ist insbesondere für Installationen vorteilhaft, bei denen der Durchfluss auf mehrere Zapfstellen zu verteilen ist, beispielsweise auf einen Wannenauslauf, eine Handbrause und eine zusätzliche Kopfbrause. Diese können über den Wasserschalter einzeln zu- und abgeschaltet werden.

Hinsichtlich des Designs oder des Bedienkomforts einer solchen Sanitärarmatur ist es nachteilig, dass zwar die Wasserschalteinheit über eine kleine Drucktaste bedienbar ist, dass aber die Durchflussmenge und/oder die Temperatur nach wie vor durch eine hebelbetätigte Mischerkartusche einzustellen ist. In jedem Fall müssen also zwei Elemente nacheinander bedient werden, nämlich der Wasserschalter zum Freigeben des Wasserflusses und das Regulierventil für Volumenstrom und/oder Temperatur.

EP2865929A1 zeigt eine über eine Drucktaste betätigbare Ventileinheit mit gleichzeitiger Durchfluss- und Temperatureinstellung. Der Aufbau ist sehr komplex und führt zu einem relativ großen Durchmesser der beweglichen Teile, wodurch größere Drehmomente zum Verstellen erforderlich sind, die über ein kleines, tastenförmiges Bedienelement ohne Hebel schwer aufzubringen sind, noch dazu mit nassen Fingern.

Die Aufgabe der Erfindung besteht somit darin, in einer Sanitärarmatur der eingangs genannten Art die Bedienung des Wasserschalters und eines weiteren Regulierventils zu erleichtern und eine filigrane Bauweise mit kleinen Bedienelementen zu ermöglichen.

Die Erfindung sieht hierzu als Lösung ein Sanitärventil mit den Merkmalen des Anspruchs 1 vor, bei dem über das drehbare Bedienelement eines Regulierventils gleichzeitig der Betätigungshub für das Umschalten des wenigstens einen gesonderten Wasserschalters ausgelöst wird. Dies wird durch eine einfache mechanische Kopplung erreicht, wobei die Ventile ansonsten völlig unabhängig voneinander aufgebaut und genutzt werden.

Die Vorteile der Erfindung bestehen insbesondere darin, dass Standardventile in kostengünstiger Weise miteinander kombiniert werden können, ohne auf eine teure Integrationslösung, die mehrere Funktionen in sich vereint, zurückgreifen zu müssen. Obwohl nach der Erfindung wenigstens zwei getrennte Ventileinheiten nebeneinander angeordnet werden müssen und wenigstens zwei Ventilsitze im Grundkörper ausgebildet werden müssen, wird trotzdem eine Reduzierung des Bauvolumens erreicht, da jedes Ventil für sich nur einen einfachen Aufbau mit geringem Durchmesser und geringer Bauhöhe besitzt. Ohnehin müssen die beiden Ventile, damit sie gemeinsam über ein einziges Bedienelement betätigt werden können, auch in seitlicher Ausdehnung nah zueinander positioniert werden, sodass die Ausdehnung des Querschnitts der Einbauöffnung für das erfindungsgemäße Sanitärventil kaum größer sein muss als bei einem zentralen Ventil mit mehrfachen Funktionen wie z. B. bei einem Hebelmischer.

Neben den geringen Kosten und der einfachen Anpassbarkeit für verschiedene Anwendungszwecke durch Kombination verschiedener Einzelventile auf demselben Grundkörper und mit denselben Bedienelementen besteht ein wesentlicher Vorteil der vorliegenden Erfindung darin, dass das Regulierventil nur einen geringen Durchmesser zu besitzen braucht und demnach die vom Benutzer aufzubringen Verstellkräfte gering sind.

Dadurch ist es möglich, die Verstellung auch mit einem relativ kleinen Drehknauf vorzunehmen, so dass eine filigrane optische Gestaltung ohne dominante Hebelelemente möglich ist.

Außerdem hat der Bediener bei dem erfindungsgemäßen Sanitärventil stets die Möglichkeit, mit demselben Drehknauf zunächst den Fließweg abzusperren und dann die Verstellung des Regulierventils im drucklosen Zustand bzw. ohne Durchfluss vorzunehmen, je nachdem, ob der Wasserschalter stromaufwärts oder stromabwärts des Regulierventils angeordnet ist, was für die vorliegende Erfindung ohne Bedeutung ist.

Möglich ist auch, mehrere Wasserschalter um ein zentrales Regulierventil herum anzuordnen. Das Mitnehmerelement am Bedienelement des Regulierventils wirkt dann auf mehrere Betätigungselemente von Wasserschaltern gleichzeitig.

Der Wasserschalter kann erfindungsgemäß mit oder ohne ein eigenes Bedienelement eingesetzt werden. Ist eine zusätzliche Taste vorgesehen, so kann das bloße Sperren oder Freigeben des Fließwegs über die Taste direkt auf der Achse des Wasserschalters vorgenommen werden. Das ist insbesondere dann vorteilhaft, wenn mehrere Wasserschalter vorgesehen sind, etwa bei einer Brause mit einer Kopfbrause und einer Handbrause sowie ggf. einer Seitenbrause. Der Benutzer kann also durch einmalige axiale Betätigung des drehbaren Bedienelements am Regulierventil alle Wasserschalter gleichzeitig betätigen, kann aber bedarfsweise auch den ein oder anderen Fließweg gezielt zu- oder abschalten.

Bei einer solchen Gruppenanordnung sollte vorgesehen sein, dass die jeweilige Taste des Wasserschalters nach direkter manueller Umschaltung in einer abgesenkten Stellung verbleibt und dass der Hub der Taste wie der Hub des zentralen Bedienelement so aufeinander abgestimmt sind, dass sich die beiden Bedienelemente solange gegenseitig nicht mehr beeinflussen, bis der Benutzer erneut eine manuelle Umschaltung über die Taste vorgenommen hat. Damit wird verhindert, dass der Benutzer, der durch Druck auf das zentrale Bedienelement alle Fließwege sperren will, versehentlich eine Wiedereinschaltung eines zuvor manuell gesperrten Fließwegs auslöst.

Bevorzugt sind alle Einzelventile eng nebeneinander in einem Grundgehäuse und mit parallelen Achsen zueinander angeordnet.

Möglich ist aber auch, den erfindungsgemäßen Ansatz, bei einem drehbaren Bedienelement eines Ventils einen zusätzlichen axialen Hub vorzusehen und diesen zum Einwirken auf ein benachbartes Ventil zu nutzen, auf eine Anordnung zu übertragen, bei der die die Achsen des Regulierventils und des Wasserschalters in einem Winkel von 45° bis 90° zueinander ausgerichtet sind. Dabei sind Abgleitschrägen an den Bedienelementen vorgesehen. Das drehbare Bedienelement des Regulierventils besitzt dann z. B. eine kegelabschnittsförmige Krempe, die auf einen Kegelabschnitt oder Keil einwirkt, der mit der Achse des Wasserschalters verbunden ist.

Der Wasserschalter kann durch ein bistabiles Magnetventil gebildet werden, das manuell über Verschiebung eines Ringmagneten geschaltet wird. Es kann sich aber auch um einen elektrischen Schalter zur Betätigung eines elektrischen Ventils handeln. Wesentlich ist nur, dass das hier als Wasserschalter bezeichnete Element durch einen axialen Hub auf ein Betätigungselement betätigbar ist.

Entsprechend kann das Regulierventil irgendein anderes Ventil oder ein anderes Schalt- oder Einstellelement sein, das über Drehung einer Achse bedienbar ist.

Insbesondere ist als Regulierventil ein Durchflussregelventil vorgesehen. Möglich ist auch ein schlank bauendes Mischer- oder Thermostatventil, wofür dann im Grundgehäuse zusätzliche Fließwege für Warm-, Kalt- und Mischwasser vorgesehen sein müssen.

Die Erfindung wird nachfolgend mit Bezug auf die in den Figuren beschriebenen Ausführungsbeispiele näher erläutert. Die Figuren zeigen jeweils in einer schematischen Schnitteinsicht:
- Figur 1A,: 1 B ein Sanitärventil gemäß einer ersten Ausführungsform mit zwei Bedienelementen und
- Figur 2: ein Sanitärventil gemäß einer zweiten Ausführungsform mit einem Bedienelement.

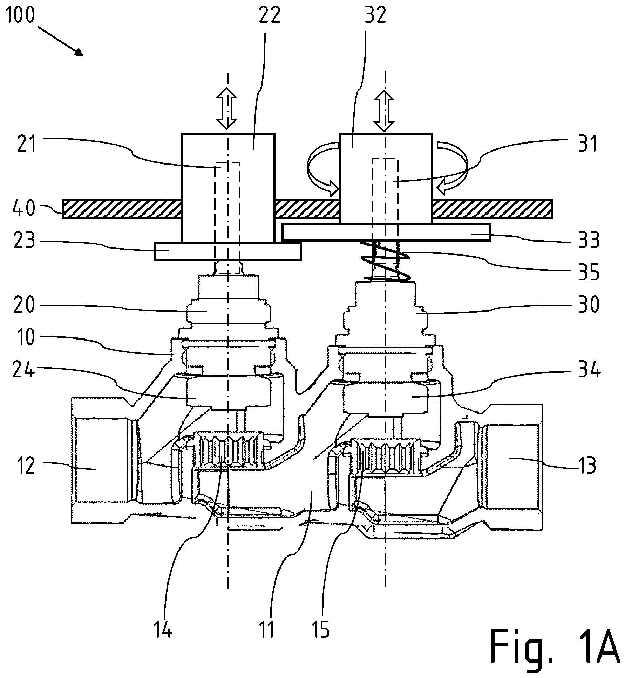

Figur 1A zeigt ein Sanitärventil 100, das auf einem Grundgehäuse 10 aufgebaut ist. In dem Grundgehäuse 10 ist wenigstens ein Strömungskanal 11 ausgebildet, der sich zwischen einer Zulauföffnung 12 und einer Auslauföffnung 13 erstreckt. In dem Grundgehäuse 10 sind im Strömungskanal 11 zwei Ventilsitze 14,15 ausgebildet. An dem stromaufwärts gelegenen Ventilsitz 14 ist ein Wasserschalter 20 eingesetzt, der über ein Dichtelement 24 den Ventilsitz 14 vollständig absperren kann. Bei dem Wasserschalter 20 kann es sich um ein bistabiles Magnetventil handeln. Wesentlich ist, dass es durch axialen Druck auf seine Achse 21 betätigt wird. Beispielsweise kann in dem Wasserschalter ein sogenannter Kugelschreiberantrieb vorgesehen sein, der bei wiederholtem Druck auf die Achse 21 das Dichtelement 24 wechselweise anhebt oder absenkt.

Auf der Achse 21 ist ein Bedienelement in Form einer zylindrischen Taste 22 aufgesetzt, die durch eine Öffnung in einer Blende 40 nach außen ragt. Die Taste 22 endet an einem unteren Kragrand 23.

In dem stromabwärts gelegenen Ventilsitz 15 ist ein Regulierventil 30 eingesetzt, dessen Dichtelement 34 in seinem Abstand zum Ventilsitz 15 in mehreren Stufen einstellbar oder stufenlos veränderbar ist, sodass der Durchfluss am Ventilsitz 15 durch eine Begrenzung des Fließquerschnitts regulierbar ist. Die Einstellung erfolgt über einen Drehknopf 32, der drehfest mit einer Achse 31 verbunden ist. Der Drehknopf 32 ist jedoch axial um den Weg eines Schalthubes gegenüber der Achse 31 des Regulierventils 30 verschiebbar, und zwar gegen die Kraft einer Feder 35, die sich an einem Ventilgehäuse abstützt.

Der Drehknopf 32 besitzt ebenfalls einen Kragrand 33, welcher hinsichtlich seines Radius' so gewählt ist, dass er auf dem Kragrand 23 der benachbarten Taste 22 aufliegt.

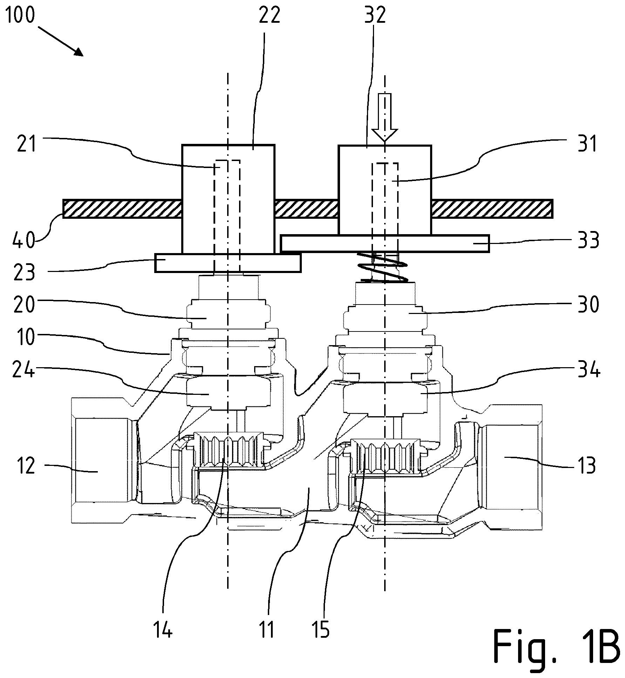

In Figur 1B ist der Schaltvorgang bei dem Wasserschalter 20 gezeigt. Dieser kann zwar einerseits auch durch separate Betätigung der Taste 22 durchgeführt werden, wird aber erfindungsgemäß insbesondere durch axialen Druck - wie durch den Blockpfeil angedeutet - auf den Drehknopf 32 des Regulierventils 30 erreicht. Lässt der Druck des Bedieners auf den Drehknopf 32 nach, werden die Bedienelemente 22, 32 aufgrund von Federelementen wieder in ihre Ausgangsstellung zurückgeschoben.

Das zuvor vorgestellte Bedienkonzept mit mehreren Bedienelementen ermöglicht, den Wasserschalter 20 auch unabhängig von einer Betätigung des Regulierventils 30 zu schalten, wozu am Wasserschalter 20 die gesonderte Taste 22 vorgesehen ist.

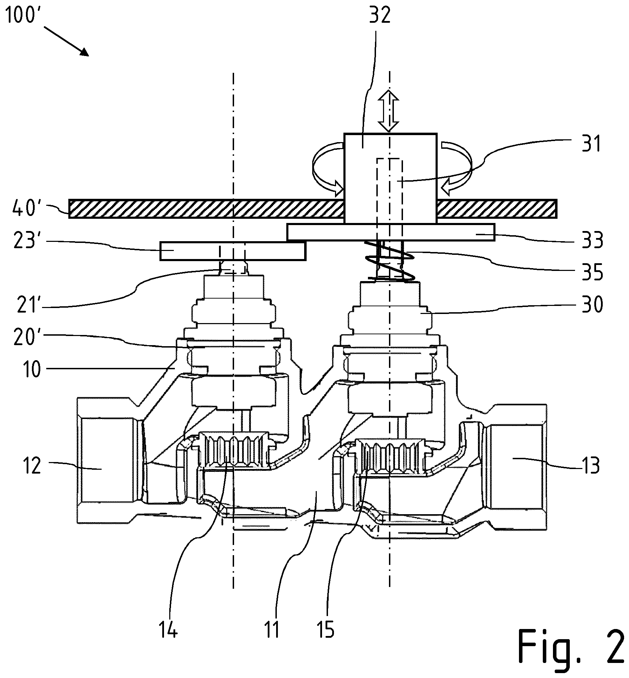

Figur 2 zeigt eine abgewandelte Ausführungsform eines erfindungsgemäßen Sanitärventils 100', das lediglich hinsichtlich der Wasserschalteinheit 20' geringfügig anders ausgebildet ist. Eine Achse 21' ist hierbei wesentlich kürzer ausgebildet. Die Blende 40' besitzt im Bereich der Wasserschalteinheit 20' keine Ausnehmung. Die Achse 21' ist lediglich durch eine Scheibe 23' verbreitert, sodass der Kragrand 33 des Drehknaufs 32 des Regulierventils 30 darauf aufliegen kann. Bei dem Sanitärventil 100' werden somit beide Ventile 20', 30 ausschließlich durch den Drehknopf 32 des Regulierventils 30 betätigt.

## Patentansprüche

1. Sanitärventil (100; 100') mit wenigstens einem Wasserschalter (20; 20'), wenigstens umfassend:
- ein Grundgehäuse (10) mit wenigstens einem Strömungskanal (11), der sich zwischen einer Zulauföffnung (12) und einer Auslauföffnung (13) erstreckt;
- dem Wasserschalter (20), der ein Dichtelement (24) zum Eingriff in einen Ventilsitz (14) in dem Strömungskanal (11) und wenigstens ein gegenüber einem Ventilgehäuse axial verschiebbares Bedienelement (21; 21') aufweist,
- ein Regulierventil (30) zur Einstellung der Wassermenge und/oder -temperatur mit einem um eine Achse (31) drehbaren Bedienelement (32);
**dadurch gekennzeichnet, dass** das drehbare Bedienelement (32) des Regulierventils (30) entlang der Achse (31) verschiebbar ist und über ein nach außen ragendes Mitnehmerelement (33) auf das Bedienelement (21; 21') des Wasserschalters (20; 20') wirkt.

2. Sanitärventil (100; 100') nach Anspruch 1, **dadurch gekennzeichnet, dass** das Regulierventil (30) und der Wasserschalter (20; 20') nebeneinander angeordnet sind und die Achsen (21, 21', 31) des Regulierventils (30) und des Wasserschalters (20; 20') parallel zueinander ausgerichtet sind.

3. Sanitärventil (100; 100') nach Anspruch 2, **dadurch gekennzeichnet, dass** das Bedienelement des Regulierventils (30) ein zumindest abschnittsweise zylindrischer Drehknauf (32) ist, der als Mitnehmerelement eine ringförmige Krempe (33) aufweist.

4. Sanitärventil (100; 100') nach Anspruch 3, **dadurch gekennzeichnet, dass** das Bedienelement (32) und/oder die Achse (31) des Regulierventils (30) innerhalb einer Ausnehmung einer Blende (40; 40') angeordnet ist (sind) und dass das Bedienelement (21, 21') des Wasserschalters (20; 20') von der Blende (40; 40') überdeckt ist.

5. Sanitärventil (100) nach wenigstens einem der vorgehenden Ansprüche 2 bis 4, **dadurch gekennzeichnet, dass** der Wasserschalter (20) ein mit der Achse (21) verbundenes Tastenelement (22) mit einer Krempe (22) aufweist, auf welche das Mitnehmerelement (33) des Bedienelements (32) des Regulierventils (30) wirkt.

6. Sanitärventil (100; 100') nach wenigstens einem der vorgehenden Ansprüche, **dadurch gekennzeichnet, dass** das drehbare Bedienelement (32) des Regulierventils (30) gegen die Kraft wenigstens eines Federelements (35) auf der Achse (31) verschiebbar ist.

7. Sanitärventil nach Anspruch 1, **dadurch gekennzeichnet, dass** das Regulierventil und der Wasserschalter nebeneinander am Grundgehäuse angeordnet sind und die Achsen des Regulierventils und des Wasserschalters in einem Winkel von 45° bis 90° zueinander ausgerichtet sind, wobei an wenigstens einem der Bedienelemente eine Abgleitschräge ausgebildet ist.
